Europäisches Patentamt

European Patent Office

Office européen des brevets

(11) Publication number: **0 307 057**
**A1**

(12) **EUROPEAN PATENT APPLICATION**

(21) Application number: 88201942.5

(51) Int. Cl.⁴: **H02M 7/523**

(22) Date of filing: 07.09.88

(30) Priority: 07.09.87 NL 8702115

(43) Date of publication of application:
**15.03.89 Bulletin 89/11**

(84) Designated Contracting States:
**AT BE CH DE ES FR GB GR IT LI LU NL SE**

(71) Applicant: **ALCATEL NEDERLAND B.V.**
**Platinaweg 10 P.O. Box 40840**
**NL-2504 LV The Hague(NL)**

(72) Inventor: **Hopman, Harm**
**Tuindreef 24**
**NL-2724 PT Zoetermeer(NL)**

(74) Representative: **Baarslag, Aldert D. et al**
**Nederlandsch Octrooibureau Johan de**
**Wittlaan 15 P.O. Box 29720**
**NL-2502 LS Den Haag(NL)**

(54) **Energy convertor.**

(57) Energy converter comprising a commutation circuit comprising a number of thyristor/diode circuits connected to a resonance circuit comprising at least one capacitive and at least one inductive element, as well as the primary winding of a transformer. A pulse generator circuit receives signal from said a current sensor in the resonance circuit and delivers in response thereto trigger pulses to the thyristors, such that the converter only operates in the trigger mode. The various components are dimensioned such that with mimimum trigger pulse frequency the maximum output power is available.

EP 0 307 057 A1

## - Energy converter -

The invention relates to an energy converter comprising:
-two input terminals destined to become connected to a DC input energy source,
- a serial circuit of two current switching semiconductors such as thyristors connected between said two input terminals, each of said two thyristors having a diode connected antiparallel across the respective thyristor,
- a resonance circuit comprising at least one capacitive element and at least one inductive element, as well as the primary winding of a transformer, said resonance circuit being connected to the junction between said two thyristors,
- a rectifying circuit connected between the secondary winding of said transformer and two output terminals,
- a current sensor for detecting the current through the resonance circuit,
- a pulse generator circuit for receiving a signal from said current sensor and delivering in response thereto trigger pulses to the gates of said two thyristors, such that in a cyclic succession a first thyristor is fired resulting in a resonant current through the resonance circuit, said current running through the first fired thyristor during a first time period and running after polarization inversion of said current through the diode, connected antiparallel to said first thyristor, during a second time period, whereafter the second thyristor is fired resulting into a resonant current through the resonance circuit, said current running through the second fired thyristor during a third time period and running after polarization inversion of said current through the diode, connected antiparallel to said second thyristor, during a fourth time period.
Resonant energy converters are already known for a long time and are used for converting a DC input energy (or a rectified AC energy) into an output energy suitable for powering a specific load. Thyristors are used to connect the input energy source in a succession of discrete time intervals to a resonance circuit resulting into a corresponding number of resonant half wave sinusoidal currents through the resonance circuit. A transformer is used to transform these currents into a suitable output current, which after rectification can be supplied to a load. Examples of these prior art resonant converters are described for instance in US patent 3.663.940 and in IEEE Transactions on Industrial Electronics and Control Instrumentation, volume IECI-17, no. 3, May 1970, pages 209-221.

These prior art circuits have a number of disadvantages, such as the appreciable harmonic contents of the voltages and currents caused by the phase angle control of AC current, a poor power factor in the AC supply line, relatively high power losses in the thyristor circuits and, because of various reasons, the necessity to use relatively low trigger pulse frequencies in the thyristor commutation circuits.

A significant improvement in relation to the above mentioned energy converters, is described by F.C. Schwarz in his US patent 3.953.779 and further explained in IEEE Transactions on Industrial Electronics and Control Instrumentation, volume IECI-23, no. 2, May 1976, pages 142-150.

The energy converter described in this last mentioned US patent has all the components mentioned in the first paragraph of this description. More specifically the resonance circuit comprises two capacitors which in a serial configuration are connected to the input terminals of the converter, whereby one inducter in a serial configuration with the primary transformer winding is connected on the one hand to the junction between both capacitors and on the other hand to the junction between the two thyristors. Furthermore the pulse generator circuit is embodied such that for each thyristor a trigger pulse is generated at a moment in which the diode, connected antiparallel to the other thyristor, is still conducting the resonant current through the circuit. In other words, at the moment the trigger pulse is generated, the resonant current through the conducting diode is taken over by the thyristor in the other branch of the thyristor circuit. The result thereof is that the current through the capacitive element (or elements) of the resonance circuit is prolonged and increased, so that the voltage across these capacitive element(s) can reach a rather high value. By controlling the exact moments at which the current through the diode in the one branch is taken over by the thyristor in the other branch is it possible to control the amount of energy delivered via the two output terminals to the thereto connected load.

This prior art convertor certainly has a number of advantages, the most important one of which is the instantaneous amplification of the driving force in the resonance circuit, caused by the "two stage effect" of the current switch over from the diode to the thyristor and resulting into a strong increase of the maximum voltage across said capacitive element in the resonance circuit. Decreasing the time periods in which the diodes are conducting, in other words decreasing the time period between each zero level crossing and the succeeding trigger pulse leads to a further enlargement of the driving force in the resonance circuit and to a further increase of the voltage across the capacitor resulting into a further enlargement of the output voltage. This phenomenon will be explained in more detail hereinafter with reference to the attached drawings.

This prior art converter, however, has also a number of disadvantages. The curve illustrating the output current as function of the time lag between the zero crossing moment and the next thyristor trigger pulse runs non-linear with a rather steep slope. Because of this rather steep slope only a very small change in time results already in a large variation of the output current. That implies that the circuit as a whole balances on the edge of instability and functions in an asymmetrical way. Indeed it is a proven fact that circuits of this type are very difficult to control.

Although in the prior art converter according US patent 3.953.779 the described current switch over between a diode and a thyristor results in the advantageous "two stage effect", it also results in a rather serious disadvantage. Almost instantaneously the current through the diode has to drop to zero whereas the current through the thyristor has to increase from zero to the momentaneous value just before the trigger moment. The corresponding steep current gradients will result into a significant amount of harmonic distortion. Furthermore because of the reverse recovery phenomenon in the diode it is not inconceivable that, although for a very short time period, the input energy source will become short circuited.

The converter now proposed by applicant is embodied such that under all circumstances the trigger pulses are supplied to the thyristors at time moments in which the resonant current has dropped to zero.

More specifically the energy converter of the type, described in the leading paragraph of this specification, is according to the invention characterized in that
- each of said first, second, third and fourth time periods covers a half sinusoidal wave period of the resonant current,
- both the sum of the first and second periods and the sum of the third and fourth periods are shorter than the time period between two succeeding trigger pulses,
- the resonance circuit is dimensioned such that the amount of energy delivered at the output terminals reaches its maximum as the time period between two succeeding trigger pulses reaches its minimum.

Although the advantage, caused by the above mentioned "two stage effect" of the current switch over from a diode to a thyristor, is now completely vanished the converter according to the invention has a number of other advantages resulting from the specific embodiment and specific functioning of the converter as will be described hereinafter.

As appears from later publications, the resonant converter disigned by Schwarz, is further developed amongst others by Hollandse Signaalapparaten B.V. Specific converter embodiments are described in the following patent publication EP-0.071.284, EP-0.071.285, NL-81.032654 and EP-0.252.432.

In the European Patent Publications 0.071.285 and 0.253.432 Hollandse Signaalapparaten B.V. draws the attention to the fact that under all circumstances a situation, in which a thyristor receives a trigger pulse when the other thyristor for one reason or another is still conducting, has to be avoided. Several solutions for this problem are offered.

An attempt to increase the flexibility of the control circuit is described in the Dutch patent application 81.03265, also filed in the name of Hollandse Signaalapparaten B.V. The solution to increase the flexibility is found in the use of a microprocessor in the control circuit.

In principle all these further publications are trying to provide improvements of the control circuit. However, non of these publications really attacks the above-mentioned instability problem.

The disadvantages of the prior art converters as well as the advantages of the converter according to the invention will be explained in more detail with reference to the accompanying figures.

Figure 1 shows a circuit diagram with reference to which the operation of the convertor according to the invention will be discussed.

Figure 2 shows in a number of diagrams the shape of some currents and voltages which occur in the circuit according to figure 1.

Figure 3 shows an expansion of the circuit diagram in figure 1.

Figure 4 shows in a number of diagrams the shape of some voltages and currents which occur in the circuit of figure 3.

Figure 5 shows in more detail a converter circuit according to the invention.

Figure 6 illustrates some wave forms for explaining the functional trigger mode of the prior art circuits.

Figure 7 illustrates some wave forms for explaning the functional indented mode of prior art converter circuits.

Figure 8 illustrates the relation between the available output current and the trigger pulse repetition frequency both for the trigger mode and for the indented mode.

Figure 9 illustrates the current cross over phenomena which appeals when a converter is functioning in the indented mode.

Figure 10 illustrates an embodiment of a converter circuit, made possible by applying the principles of the invention.

Figure 11 illustrates the influence of a snubber circuit on the functioning of the converter according to the invention.

Figure 12 illustrates the relation between the available output current and the maximum trigger pulse repetition to frequency in comparison with the corresponding diagram of figure 8.

Figure 13 illustrates an embodiment of the high-voltage transformer with associated rectifying unit and output capacitor, intended in particular for use in converter circuits for charging capacitors used for triggering flash tubes.

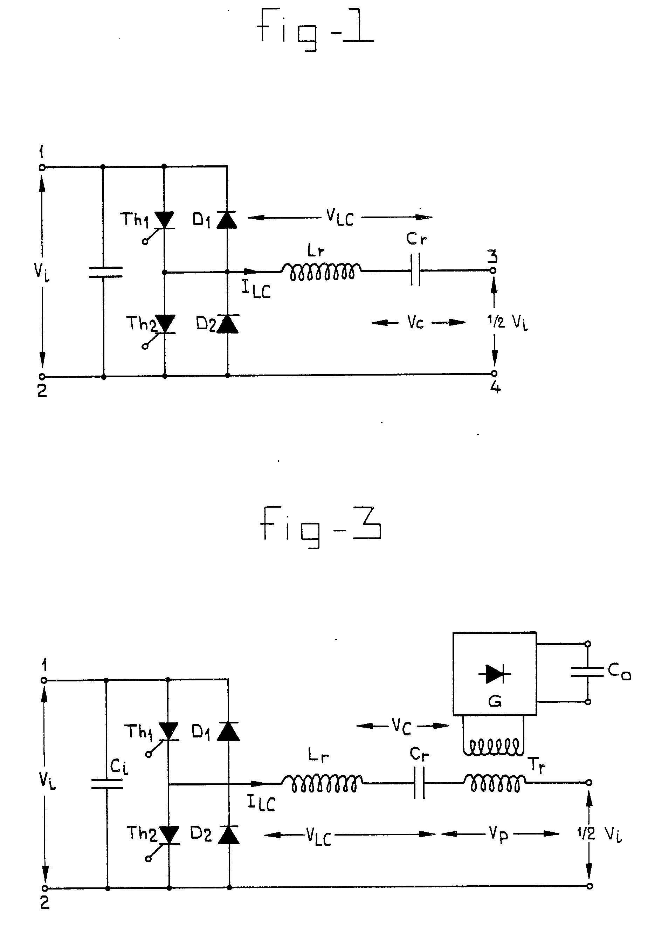

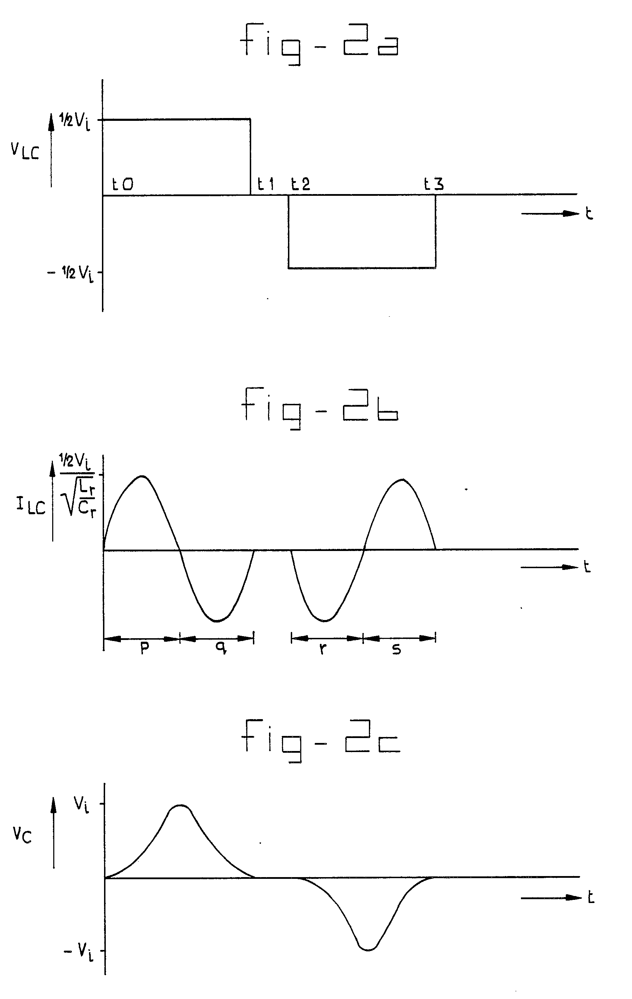

Figure 1 shows a circuit comprising an input capacitor Ci, with parallel thereto a series circuit of two thyristors Th1 and Th2. Each thyristor is shunted in antiparallel by a diode, viz. the diode D1 across Th1 and the diode D2 across Th2. Connected to the junction point between the thyristors Th1 and Th2, there is a series circuit composed of an inductor Lr and a capacitor Cr.

If a direct voltage Vi is applied to the input terminals 1 and 2 of said circuit and if the output terminals 3 and 4 are connected to a voltage source which delivers a direct voltage of 1/2.Vi, then a resonant current is produced through the series circuit composes of the coil Lr and the capacitor Cr if the thyristors Th1 and Th2 are alternately switched into conduction, as will be made clearer below with reference to Figure 2.

Figure 2a shows the voltage $V_{LC}$ which arises across the series circuit composed of Lr and Cr if only Th1 is made to conduct between t0 and t1 and if only Th2 is made to conduct between t2 and t3. In both cases there is a direct voltage having an amplitude of 1/2.Vi across the series circuit, which voltage has a positive sign between t0 and t1 and a negative sign between t2 and t3.

As a result of switching a voltage in steps across the series circuit composed of the coil Lr and the capacitor Cr, a sinusoidal resonant current will start to flow through said series circuit with a frequency equal to

$$\frac{1}{2\pi \sqrt{(Lr \cdot Cr)}}$$

and an amplitude equal to

$$\frac{1/2\ Vi}{\sqrt{\dfrac{Lr}{Cr}}}$$

In Figure 2b, said resonant current $I_{LC}$ is plotted on the same time-scale as Figures 2a and 2c. In Figure 2b, four separate time periods are indicated by p, q, r and s. Immediately after Th1 is switched on, current will start flowing in the forward direction through the switched-on thyristor and through the resonance circuit. Said current is, however, sinusoidal and, at the end of the period p, will exhibit a zero crossing. Owing to the presence of the diode D1, however, the negative half cycle of the current can also continue to flow through the resonance circuit. At the end of the period 1, the zero value is reached again. At that instant, the thyristor Hr1 is also switched off so that no further current can any longer flow though the resonance circuit. During the period p, energy is therefore drawn from the input capacitor Ci via the thyristor Th1, whereas, during the subsequent period q, said energy is delivered back again to the input capacitor Ci via the diode D1.

A similar process, in which, however, the various voltages and currents have reversed polarity, occurs when Th2 is switched on at the instant t2. Immediately after switching on, the negative half of a sinusoidal current will start to flow through the resonance circuit during the period r, whereas, after the passage through zero, the diode d2 starts to conduct and makes it possible for the positive half of the sinusoidal current also to flow during the period s through the resonance circuit. Here again, energy will be pumped out of the capacitor Ci via the thyristor Th2 into the series circuit during the period r, whereas said energy is fed back again to the input capacitor Ci in the period s subsequent thereto via the diode D2 which is then conducting.

In Figure 2c, the voltage Vc across the capacitor Cr is plotted separately. In this figure it has been assumed that, after a complete resonance current period no residual charge is left behind in the capacitor. At the end of the periods q and s, the voltage Vc is therefore equal to zero.

In practice, the resonance current $I_{LC}$ will result into some heat dissipation heat in the various components, as a result of which the energy which is absorbeed in each case in the first subperiod (p or r respectively) from the input capacitor Ci is somewhat larger than the energy which is returned to said input capacitor Ci in each subsequent subperiod (q or s respectively). However, in practical circuits these losses appear to be very small.

Figure 3 reveals the manner in which the current occurring in the series circuit can be used in a beneficial manner to deliver an output current. Figure 3 shows in principle the same circuit as shown in Figure 1, now expanded with a transformer Tr, the primary winding of which is incorporated in the resonance circuit, whereas the secondary winding is connected to a rectifying unit G which is connected to an output capacitor Co.

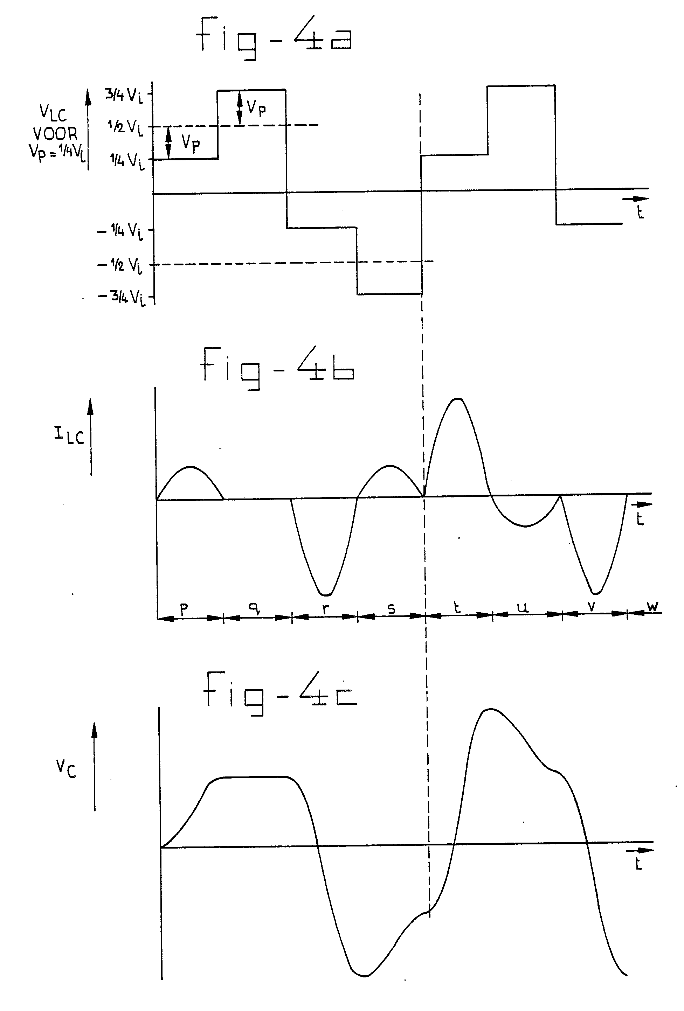

Figure 4 shows a number of diagrams which illustrate currents and voltages occuring in the circuit of Figure 3. To simplify these diagrams, it has been assumed, in particular in Figure 4a, that the voltage Vp across the primary winding of the transformer Tr is equal to 1/4 Vi. In general, however, said voltage is dependent on the load across the secondary side of the tranformer Tr and on the transformer ratio. It will be clear that even completely different values may occur for Vp in practice. The manner in which the circuit functions is not, however, affected thereby.

In Figure 4a, the voltage $V_{LC}$ across the resonance circuit composed of Lr and Cr is again plotted. It will be clear that, immediately after switching on, the voltage 1/2.Vi arises across the series circuit composed of Lr, Cr and Tr. Since, however, a voltage Vp = 1/4.Vi exists across the transformer, the step voltage across the actual resonance circuit is limited to 1/4.Vi. Said step voltage again produces a sinusoidal current $I_{LC}$ through the resonance circuit, the positive half of which flows during the period p in the manner as illustrted in Figure 4b. During said period p, energy is drawn from the input capcitor Ci via the thyristor Th1 which is switched into conduction and the resonance circuit capacitor Cr is charged up therewith as is evident from Figure 4c in which the voltage Vc over said capacitor is plotted.

At the end of the period p, that is to say at the instant when the diode D1 will tend to conduct because the resonant current reverses direction, there also occurs however, a reversal of the current direction in the output rectifier G, with the consequence that the polarity of the secondary transformer voltage, and consequently also that of the voltage in the primary winding, of the transformer Tr is reversed. As a result, a step-wise change occurs in the voltage $V_{LC}$ with a magnitude of 2.Vp in the positive direction, as is indicated in Figure 4a. Although the tuned circuit current should now start to flow in the negative direction, the flow of said current is prevented by this step voltage which is twice as high, with the result that D1 does not start to conduct. During the period q, the current therefore remains equal to 0 and no change takes place in the voltage Vc across the capacitor Cr.

At the end of the period q, the thyristor Th2 is triggered into conductance. The step voltage now reverses direction and reaches a value of -(1/2 Vi - Vp). The voltage Vc which was still present across Cr acquires a driving effect on the circuit response, with the result that the negative half sinusoidal period of the tuned-circuit current has a relatively large amplitude during the period r. As a result of the total driving force of the circuit, which is equal to -(1/2 Vi - Vp + Vc), a maximum tuned-circuit current is produced of:

$$\frac{1/2.Vi - Vp + Vc}{\sqrt{\dfrac{L_r}{C_r}}}$$

The polarity of the voltage across Cr is reversed during the period r to a negative value of
-(1/2.Vi - Vp) - (1/2.Vi - Vp + Vc).

At the end of the period r, the current in the circuit reverses direction. As already explained above in the discussion of the period q, an extra step voltage now also occurs again across the circuit of 2 Vp, as a result of which a damping of the resonant current is produced. Although the diode D2 will start to conduct in this case, the positive half sinusoidal period of the tuned-circuit current occurring during the period s has an appreadibly lower amplitude than was the case during the period r.

At the end of the period s, the voltage Vc across the capacitor Cr has reached the same final value (albeit with opposite sign) as at the end of the period q. This means that at this instant the stable cyclic condition has been reached. If, starting from this instant, the alternate triggering of the thyristors Th1 and Th2 is continued at instants at which the resonant current passes through zero, a resonant current $I_{LC}$ will start to flow which has the form shown in Figure 4b, the capacitor voltage Vc varying in the manner indicated in Figure 4c.

Referring back for a moment to Figure 2b, the attention is drawn to the fact that the amplitudes of the positive and negative half cycles of the tuned-circuit current are in that case equal to each other (apart from any losses in the circuit itself) and therefore, on balance, no energy is drawn from the input capacitor Ci. In the circuit of Figure 3, however, the case is reversed. During the periods r, t, v, etc., one of the thyristors Th1 and Th2 is always conducting and a current with a relatively high amplitude flows. It is precisely during these periods that energy is drawn from the input capacitor Ci. In the intervening periods, s, u, w, etc., energy is delivered back to the capacitor Ci via the diodes D1 and D2 which are then conducting. That takes place, however, at a much lower current level. On balance, therefore, energy will be delivered specifically via the transformer Tr to the output capacitor Co.

With every change in the output voltage across the capacitor Co resulting in a change in the voltage Vp, a different stable cyclic state will arise. With a fixed dimensioning of the converter, however, the average current through the output capacitor Co will remain the same. As a result of this characteristic and as a result of the environmentally-favourable switching behaviour of the converter (since the thyristors Th1 and Th2 switch whenever the resonant current passes through zero), this converter is eminently suitable for systems in which a current source is necessary, for example power systems for charging up a flash capacitor in, for example, copying equipment. The output capacitor Co can be charged up to any desired voltage by choosing the correct transformer ratio.

A further advantage of the circuit is the ability to withstand short-circuiting. If the output is short-circuited, Vp becomes equal to zero, producing, as it were, the situation in Figure 1, in which on balance, no energy is delivered.

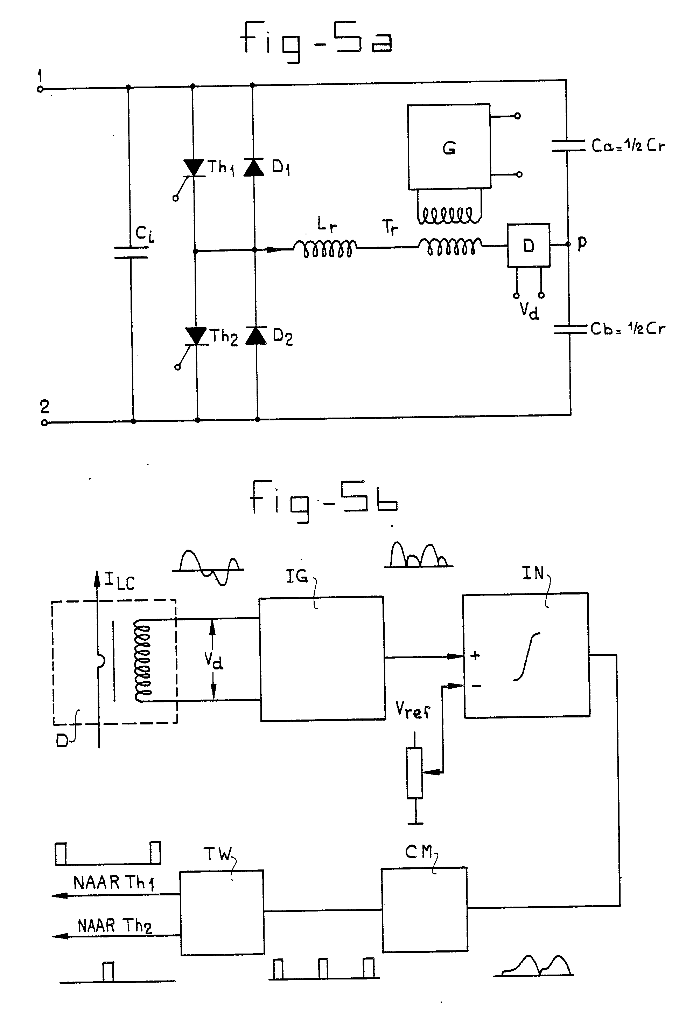

Figure 5a shows a practical implementation of the circuit diagram in Figure 3. In this implementation, the pure series resonance circuit composed of Lr and Cr is converted to a T configuration composed of the inductor Lr and two capacitors Ca and Cb, each having a capacitance value equal to half that of Cr. In the manner shown in Figure 5a, the capacitors Ca and Cb are mutually connected in series across the input terminals 1 and 2, whereas the inductor Lr is connected via the transformer Tr and via a detector unit D added in this circuit to the junction point between the two capacitors Ca and Cb. Such a conversion of a pure series circuit to a T structure is assumed to be known to anyone skilled in the art. This transformation does not, however, have any effect on the operation of the circuit.

The input terminals 1 and 2 of the circuit in Figure 5a have to be connected to a direct-voltage source, comprising for example, a known combination of a transformer, rectifier and smoothing circuit. The details thereof are, however, assumed to be known to the person skilled in the art.

The detector unit D in Figure 5a is intended to detect the resonant current $I_{LC}$ which flows through the resonance circuit. The detection unit D controls a pulse-generator circuit which generates trigger pulses for the thyristors Th1 and Th2 at instants in time at which the resonant current is zero. Preferably, for said detector D, use is made of a detector which adds no resistance elements or capacitive elements to the actual resonance circuit since that alone would introduce losses into the circuit. It is therefore preferable to use a detector unit a toroidal-core transformer having a small number of primary windings and a matching number of secondary windings. Figure 5b indicates such toroidal-core transformer diagrammatically with the square D.

Figure 5b illustrates schematically an example of a controller for generating trigger pulses for the thyristor Th1 and Th2 in figure 5a. In figure 5b the secondary winding of the toroidal-core transformer D with the detection voltage Vd it is connected to an ideal rectifer IG. An ideal rectifier is understood to means a circuit which converts the applied alternating voltage into a rectified voltage without floss and without distortion. Circuits for implementing ideal rectifiers are known from the literature and are assumed to be within reach of anyone skilled in the art. Figure 5b shows diagrammatically the voltage wave forms occurring at a number of points.

The ideal rectifier IG delivers the rectified output voltage to an integrator unit IN, to which an adjustable reference signal is also fed. The adjustability is symbolized with the aid of the potentiometer P, but it will be clear that said adjustable reference voltage can be generated in any arbitrary manner known to the expert. The output signal of the integrator IN is supplied to the comparator CM which compares said output signal with a fixed reference voltage, for example the zero voltage. Depending on the variable reference voltage added in the integrator IN, the zero crossing level in the output signal of the integrator will vary. As a consequence, it is possible to vary the average current through the transformer Tr and, consequently also the average output current through the output capacitor Co, as desired.

A pulse train appears at the output of the comparator CM, the pulses always occurding at an instant when the input voltage of the comparator reaches the reference value (for example, the zero value). Said pulse train is converted with the aid of the divide-in-two circuit TW into two separate pulse trains which are in antiphase with each other, each having a number of pulses equal to half the number of pulses in the input pulse train. Said pulse trains are used to control the thyristors Th1 and Th2.

The circuit diagram illustrated in figure 5a is at a first glance identical to the circuit illustrated by Schwarz in his already mentioned US patent 3.953.779. The circuit appeapently also corresponds to the circuits described by Hollandse Signaalapparaten B.V. in their earlier mentioned patent pulbications which circuits are in fact further developments of the Schwarz-circuit. However, there is a basic difference between the prior art circuits and the circuit according to underlying application, residing in the dimensioning of the various components of the circuit as will be described in detail hereinafter.

Although above the functioning of the converter is described for circumstances wherein in the stable cyclic condition the period u, in which a diode is conducting, is directly followed by a period v in which the thyristor in the other branch is conducting, these circumstances will only appear if the load, connected to the output of the circuit, requires exactly that amount of power, delivered under these circumstances.

If the required amount of output current decreases, then the frequency at which the trigger pulses are supplied to the thyristors Th1 and Th2 has to be lowered. The result thereof is that a further time period is introduced between the period u and the period v. The mode in which the circuit is functioning then can be called the trigger mode.

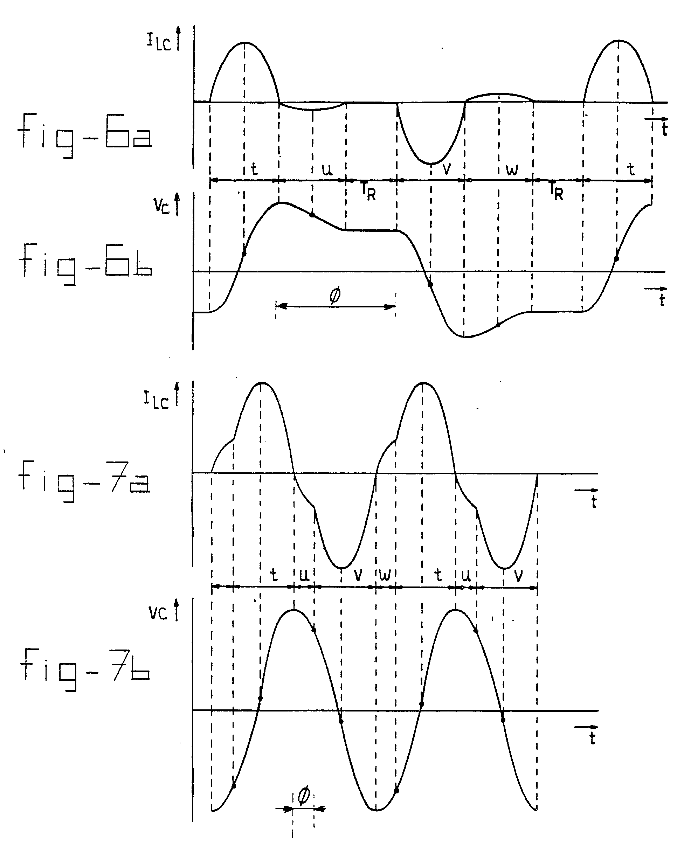

If on the other hand the required amount of output current increases then the trigger pulse repetition frequency has to increase and, starting from the circumstances assumed in figure 4, the circuit will be set in the so-called indented mode. Both modes are described by Hollandse Signaalapparaten B.V. in their already mentioned patent publications. Both modes will be discussed in the following paragraphs with reference to the attached figures 6a, 6b and 7a, 7b.

Figure 6a, illustrating the trigger mode, shows the flow of current $I_{LC}$ through the resonance circuit and figure 6b shows the voltage $V_C$ at point P. During period t (thyristor phase) thyristor Th1 is in the conductive state. Current $I_{LC}$ increases in the first instance, causing the voltage $V_C$ to rise, whereupon the current $I_{LC}$ again decreases to zero and the voltage $V_C$ assumes its maximum value. As soon as current $I_{LC}$ is zero, thyristor Th1 ceases to conduct and an opposite current flows through diode D1. In the then commencing period u (diode phase) this diode current causes the voltage $V_C$ to decrease slightly. When the diode current is finally zero, the voltage $V_C$ remains constant during an idle period $T_R$ until thyristor Th2 is brought in the conductive state. In period V (thyristor phase) and the subsequent period w (diode phase) the current $I_{LC}$ is equal, but opposite to that in periods t and u respectively, while voltage $V_C$, voltage E is equal but opposite to that in periods t and u.

Figure 7a, illustrating the indented mode, shows the flow of current $I_{LC}$ through resonance circuit and figure 7b shows the voltage $V_C$ at point P in the case when the thyristors are fired at time moments when the diodes are still in the conductive state. In periods t and v, energy from the input source (capacitor Ci) is supplied to load; in periods u and w, a portion of the energy supplied to the resonance circuit is returned to the input source via the series resonant circuit and a por;tion is extracted by load. Depending on the energy supplied to the series resonant circuit and the energy extracted therefrom, it is possible to create an equilibrium, where the amount of energy supplied and transferred to the load is kept constant by appropriately setting the firing instants of thyristors Th1 and Th2. In this situation the magnitude of the voltage across the primary winding of output transformer Tr is in fact constant.

As already indicated above the trigger pulse repetition frequency is dependent upon the required amount of output current. At low frequencies the circuit operates in the trigger mode and supplies only a comparative low output current to the load connected to the output terminals. At increasing frequencies the circuit steps from the trigger mode into the indented mode in which much higher output currents can be generated. The reason therefore is that the resonant current in the circuit each time starts flowing through a diode and is then taken over by the thyristor in the other branch of the commutation circuit. In other words, the resonant current is developed under support of a two stage driving force and the result thereof will be a significant amplification of the voltage developed across the capacitors in the resonant circuit, and therewith an amplification of the output current supplied to the load. This is clearly described and illustrated by Schwarz.

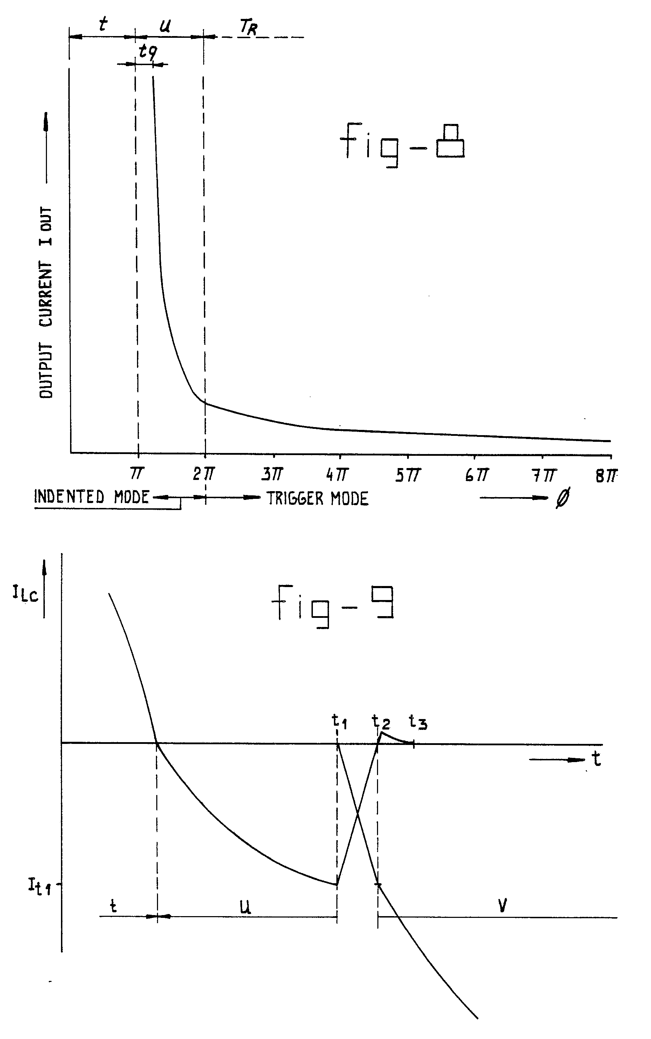

The strong increase of the output current can be demonstrated clearly by drawing the curve illustrating how the output current varies as function of the trigger pulse repetition frequency. Such a curve is shown in figure 8. The available output current $L_{out}$ is set out along the vertical axis wheres the time period $\phi$ is set out along the horizontal axis. As is illustrated graphically in figures 6 and 7 the time period $\phi$ is equal to the sum of the period u (the diode phase) and the waiting period $T_R$ (during which no resonant current flows through the circuit). Because in figure 7 (the indented mode) the period $T_R$ is equal to zero the variable $\phi$ is in the indented mode in fact equal to u.

In case $\phi$ is relatively large the circuit will generate with rather large intervals periods t and v in which a substantial amount of energy is supplied from the circuit to the load connected to the output terminals. In other words the average energy supplied to the load is rather low. It will be clear that shortening of the time period $\phi$ will result into a larger number of periods t, v per time unit and in agreement therewith a larger amount of output current available at the output terminals to the load. If the period $\phi$ is shortened to such an extend that $T_R$ becomes zero and in fact $\phi = u$, than the circuit is brought from the trigger mode into the indented mode. As is clearly illustrated in figure 8 the available output current shows a sharp increase during the intended mode as the period $\phi$ is shortened further. During the trigger mode there is an almost linear relation between the period $\phi$ and the available output current. On the other hand, however, the relation between $\phi$ and the available output current during the indented mode is very non-linear.

As is shown in figure 8 there is a predeter-

mined period $\phi_{min}$. This period results from the fact that each thyristor Th1, Th2 in the commutation circuit has a certain gate turn off time $t_q$, which is the time period necessary to ascertain that, after the zero level crossing of the thyristor current, the thyristor is indeed switched off. This time period $t_q$ is normally specified in each thyristor datasheet. Because a situation in which both thyristors are conducting simultaneously has to be avoided, it will be clear that after the current through Th1 crosses the zero level one has to wait at least during the period $t_q$ before a trigger pulse to the other thyristor Th2 can be generated and vice versa.

As already said the curve in figure 8 illustrates that in the trigger mode only rather low output currents can be supplied whereas in the indented mode, because of the two stage driving force in the resonant circuit very significant output currents can be supplied to the load connected to the circuit. Specifically this possibility to generate rather large output currents is always considered the main advantage of the circuit by all developers. That is most likely the reason why Schwarz only has described the indented mode in detail and has not paid any attention to the trigger mode. Although Hollandse Signaalapparaten describes in her patent publications both the indented mode and the trigger mode, the developments described in said patent publications are specific further dimensions of the original Schwarz-circuit.

Although, as already said, on the one hand, the possibility to generate a rather large output current can be considered as a significant advantage, on the other hand the controller for controling the circuit will balance on the edge of instability the more the period $\phi$ is shortened and the more the output current is increased. Figure 8 illustrates clearly that near the minimum period $\phi$ (in other words near the maximum trigger pulse frequency) the curve runs almost vertically which implies that a fractional variation of the period $\phi$ and therewith of the trigger pulse frequency results in rather large variation in the output current, so that certainly instability problems will arise.

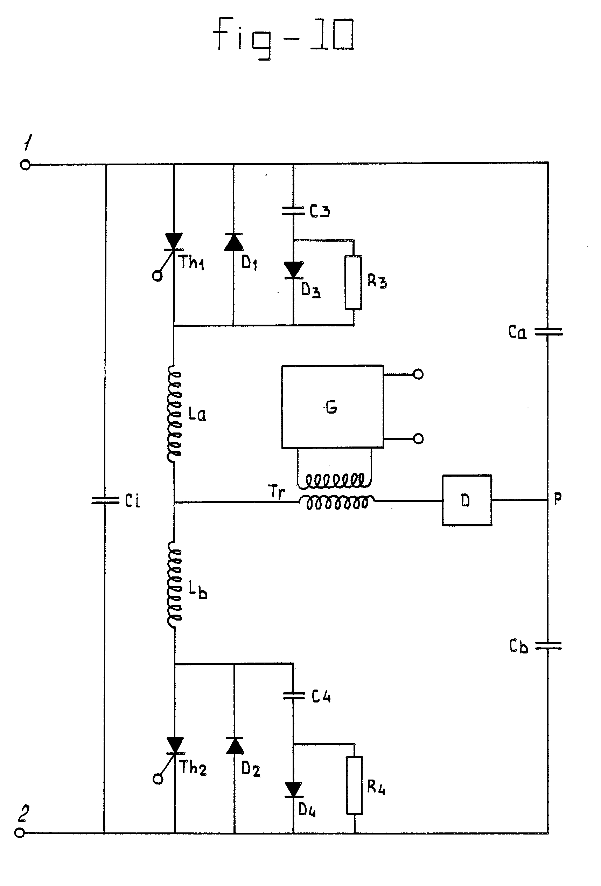

A further disadvantage of the indented mode will be explained with reference to figure 9. In figure 9 the resonant current $i_L$ through the resonant circuit is illustrated on an enlarged scale. To indicate the relation between for instance figure 8 and figure 7 the time period t, u and v appearing in figure 7 are also indicated in figure 9. During period u the diode in one of the branches of the commutation circuit, for instance D1 in figure 5a, is conducting. The circuit is because of the rather high required output current functioning in the indented mode and at the time moment t1 a trigger pulse is send to the thyristor Th2 in the other branch of the commutation circuit. As is rather simply illustrated in figure 7 the result thereof would be that the thyristor Th2 starts conducting, so that the resonant current now starts running through this fired thyristor whereas the current through the diode D1 drops to zero. Not illustrated in figure 7, however, is the fact that it takes some time to change the flow path of the resonant current from D1 to Th2.

In figure 9 the switch over situation is illustrated in more detail. At the end of the period u, in which the diode D1 is conducting alone, the trigger pulse to the thyristor Th2 is generated at the moment t1. At that moment the resonant current has a value It1. The thyristor Th2 is not able to take over that current instantaneously and needs some time to build up a sufficient current and to reach said momentaneous value. In fact the current through the thyristor Th2 reaches the value I t1 at the moment t2. Simultaneously some time is needed to decrease the current through D1 from the momentaneous value It1 to zero. As illustrated in figure 9 the current through D1 is dropped to zero at the moment t2. It will be clear to the expert in this field that this current cross over phenomenon is not controled in any way by the controller circuit for instance the circuit illustrated in figure 5b but is mainly dependent upon the characteristics of the used components. That means that the length of the time period betwen t1 and t2 is uncontrollable and forms in fact a further factor with a negative influence onto the stability of the circuit. Furthermore because of the very large di/dt values between t1 and t2 a strong burst a harmonics is generated at rather high frequencies. This transmission of bursts of higher harmonics into the environment is considered as very unfavourable and forms a serious disadvantage of the indented mode.

A further disadvantage results from the diode reverse recovery time appearing between t2 and t3. As is known to the expert in this field the reverse recovery time is needed by the diode D1 to drain the remaining charge carriers and to reach indeed the zero level. Because between t2 and t3 the diode D1 is conducting in the same direction as the thyristor Th2 in fact the energy source connected to the input terminals of the converter becomes short circuited. This may cause damage to the input energy source. Furthermore, because of this short circuiting the control of the circuit between t2 and t3 is rather unreliable and not predictable, forming therewith a further factor with a negative influence on the stability of the circuit.

The solution provided by the invention is now to dimension the whole circuit such that the circuit is only able to operate in the trigger mode, in other words embodied such that the indented mode is strictly forbidden. More specifically that implies that the controller circuit is embodied such that it can only generate a maximum trigger pulse frequency at which the converter is functioning as is described with reference to figure 4 (the stable condition). Up to now, no one has recognized that, by restricting the functioning of the converter circuit to the trigger mode, it is possible to use a much higher trigger pulse repetition frequency than is possible with the prior art Schwarz-circuit. The only restriction to the trigger pulse repetition frequency comes from the $t_q$ of the used thyristors. Referring back to figure 4b it will be understandable that the only restriction to the length of the period u in which the diode D1 is conducting, is set by the gate turn off time $t_q$ of the thyristor Th1. In other words the other thyristor Th2 can be fired after a period which is at least equal to $t_q$. Because thyristors with rather short gate turn off times are available, the dimensioning procedure according to the principles of the invention would be to determine first of all the switch off time $t_q$ of the thyristors to be used in the circuit. Of course the thyristors should fulfil other requirements as to the maximum current, voltage across the thyristor, etc. After the gate turn off time $t_q$ is determined, the mimumum time between succeding trigger pulses can be determined as twice this gate turn off time $t_q$ which time is directly related to the maximum trigger pulse repetition frequency. Thereafter the component values of the resonance circuit inducter Lr and of the resonance circuit capacitor Ca and Cb are determined such that the resonant frequency of this circuit equals the maximum trigger pulse repetition frequency. Finally the transformation ratio of the transformer Tr is determined such that the output energy is delivered at the required voltage and/or current levels.

As already said, because only the gate turn off time of the used thyristors is the determining factor for selecting the maximum trigger pulse frequency, very high trigger pulse frequencies may be used. The result thereof is that the physical dimensions of the used components in the resonance circuit can be rather small in comparison to the components which have to be used in the prior art Schwarz-circuit.

Because the circuit according to the invention is strictly functioning in the trigger mode the control circuit acts on a rather linear relation between the detected current and the trigger pulse frequency. Furthermore the circuit acts as a natural current source, even without any control action. There are no cross over problems of the type illustrated in figure 9 and furthermore any losses on the circuit (which are extremely low) are decreasing with decreasing load.

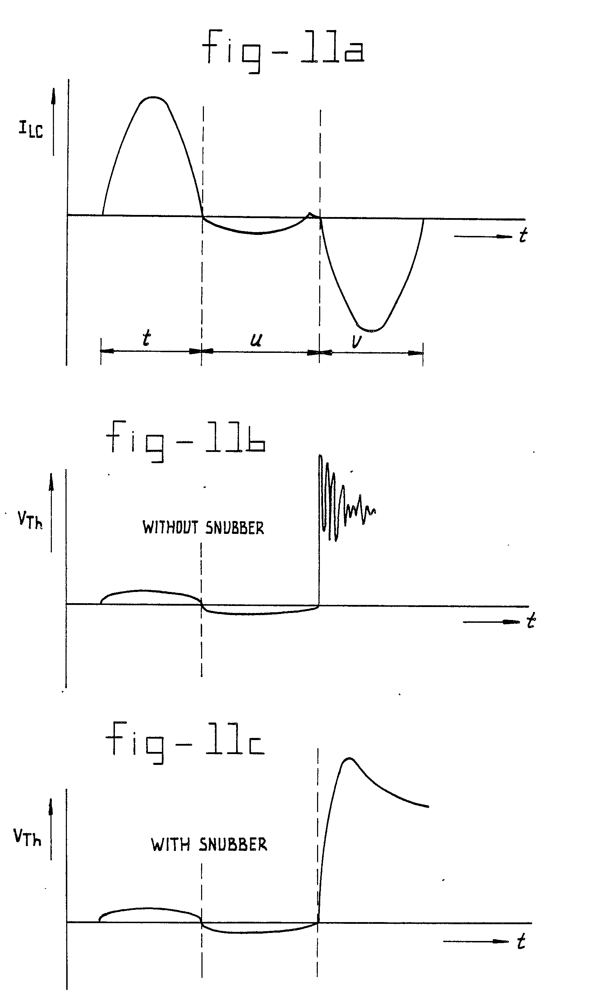

A further developed circuit, in which the inventive principles are applied, is illustrated in figure 10.

Those components, which are identical to the components used in the circuit illustrated in the figure 5 are referenced by the same reference characters. As will be clear from a comparison between figure 5 and figure 10 there are two differences between both circuits. In figure 10 the resonant inductive element of the resonant circuit is formed by two inductors La and Lb connected in a mutual serial configuration between the thyristors Th1 and Th2. A further difference is the presence of so-called "snubber" circuits connected across the diodes D1 and D2 and each consisting of a diode D3, D4, a resistor R3, R4 and a capacitor C3, C4. Snubber circuits are as such considered as known to the expert in this field and therefore do not require extensive explanation.

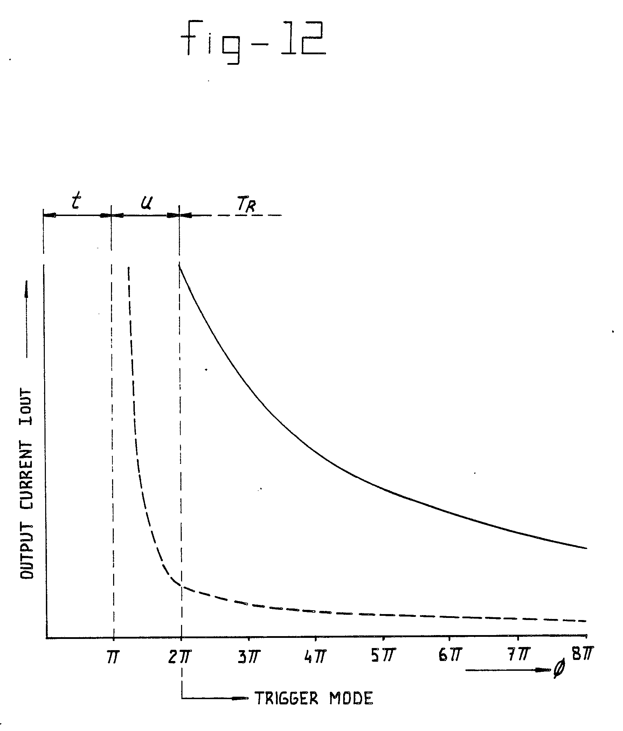

The inductance value of the components La and Lb and the capacitance values of the capacitors Ca and Cb are in accordance with the invention selected such that at the maximum trigger pulse frequency the circuit is still operating in the trigger mode. Irrespective of the different position of the inductive elements La and Lb in the resonant circuit the principle functioning of the circuit is completely identical to the functioning of for instance the circuit illustrated in figure 5. The advantage of the positioning of the inductors La and Lb in the way illustrated in figure 10 is that in the illustrated configuration these inductors cooperate with the snubber circuits in a very advantageous manner as will be described hereinafter with further reference to figure 11.

In figure 11A again the current $I_{LC}$ through the resonant circuit is illustrated distinguishing various periods which, in correspondence with preceding figures, are indicated as t, u, v. In figure 11B the voltage across the parallel combination of thyristor Th1 and diode D1 in one branch of the commutation circuit is illustrated. During period t the thyristor Th1 is conducting and the voltage $V_{Th}$ across said thyristor is in the order of about 2-3 Volt. During period u and diode D1 is conducting and correspondingly the voltage $V_{Th}$ has now a reversed polarity and an amplitude of about 1-2 Volt. At the end of period u the diode stops conducting after the appearance of the reverse recovery phenomenon already discussed above with reference to figure 9 and again schematically illustrated in figure 11A. During the reverse recovery period the voltage $V_{Th}$ gradually decreases to zero. Thereafter, at a suitable moment, the other thyristor Th2 is fired so that again a resonant current $I_{LC}$ will flow through the resonant circuit as is illustrated by period v in figure 11A. The voltage across the now non-conducting thyristor Th1 is in fact changing stepwise from zero to a high voltage which is dependent on the momentare load of the converter in a way as illustrated in figure 11B. Because each thyristor has a certain parasitic capacitance this stepwise voltage change causes a parasitic ascellation of very high frequency in the voltage $V_{Th}$ across the thyristor Th1 as is shown in figure 11B. This is a serious disadvantage. To eluminate said disadvantage the circuit according to the invention is equipped with the aforementioned snubber circuit, consisting of diode D3, capacitor C3 and resistor R3.

At the moment the other thyristor Th2 is fired the voltage across Th1 rises because of the presence of the capacitor C3 and the now conducting diode D3 according to a sinucoidal curve the frequency of which is determined by the combination of both coils La and Lb and the capacitor C3. The result thereof is that the voltage across Th1 arises as is illustrated in figure 11C. During the rising edge the diode D3 is conducting, therefor resistor R3 does not play any role. However, as soon as the voltage $V_{Th}$ reaches its maximum the diode D3 stops conducting suddenhow resistor R3 forms part of the resonant path through La, Lb and C3. This resistor R3 has now a strong dumping influence on the voltage curve of $V_{Th}$ as is clearly indicated in figure 11C. In fact, after reaching the maximum voltage $V_{Th}$ max the voltage $V_{Th}$ gradually approaches the final value which is dependent on the momentary load of the circuit.

Important is that by proper dimensioning of the resonant path components La, Lb, C3 and R3 the curve of the voltage $V_{Th}$ is completely controllable and predictable and is not, as in the case of a converter without snubber circuits, determined by parasitic capacitance. Preferably the frequency determined by the snubber capacitor C3 and the coils La, Lb of the resonant path is selected such that the voltage gradient dv/dt as well as the current gradient di/dt through each of the semiconductors Th1, Th2, D1, D2 is restricted to an allowable value.

It will be clear that the snubber circuit across the lower branch of the commutation circuit functions in a identical way.

The attention is drawn to the fact that a circuit configuration with two inductors La and Lb of the type illustrated in figure 10 is not possible in the case the converter is working in the indented mode. The indented mode requires a very fast current switch over from the diode in the one branch of the commutation circuit, for instance D1 to the thyristor in the other branch of the commutation circuit, for instance Th2. As will be clear to the expert in this field, such a fast current change over would be prohibited because of the presence of La and Lb in the current path in which the current switch over has to be carried out.

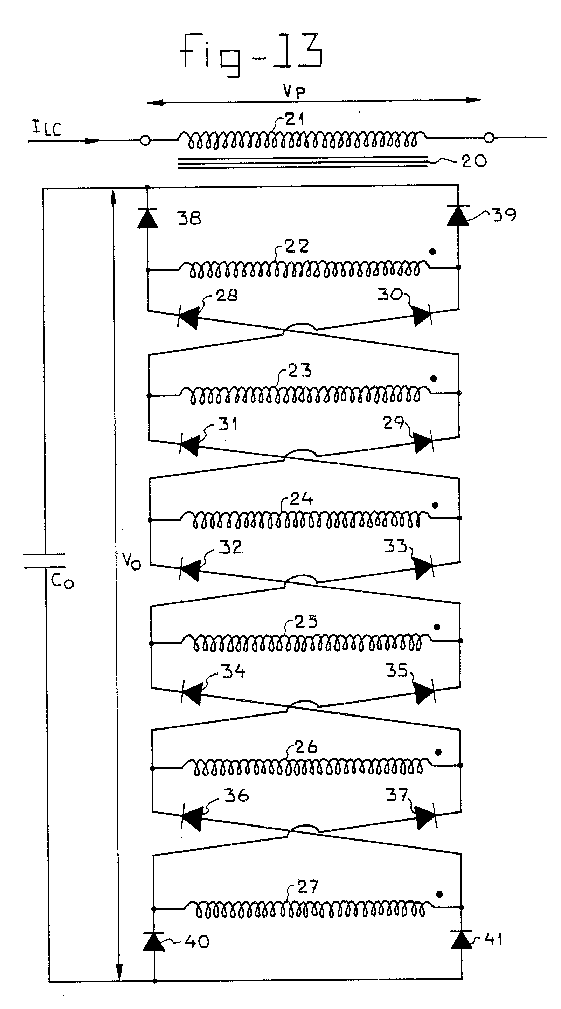

The difference between the control curve according to which the prior art Schwarz-circuit is controlled and the control curve according to which the circuit according to the invention is controlled is illustrated in figure 12. In figure 12 the control curve for controlling the circuit according to the invention is illustrated with the drawn line whereas, to be able to compare this curve with figure 8, the control curve of figure 8 is illustrated by means of a dash line.

As appears from figure 12 the control curve, according to which the controller circuit has to control the converter according to the invention, runs approximately linear, which implies that the stability of the whole circuit is much better than the stability obtainable in the Schwarz-circuit. Furthermore the circuit according to underlying application functions only in the trigger mode avoiding thereby the described negative effects of the indented mode.

Owing to the use of the resonance principle, the energy losses in the circuit are limited to a minimum. In practice, only a very low heat dissipation occurs. Only the transformer Tr still deserves particular attention. In order to keep the losses of the entire circuit as low as possible, the transfer of energy from the primary side of the transformer Tr to the output capacitor Co has to be carried out in as loss-free manner as a possible.

It is assumed in figure 12 that the resonance circuit is dimensioned such that the resonant frequency is identical to the frequency assumed in figure 8. However, because it is allowed, as explained above, to reduce the period u until u = $t_q$, the maximum trigger pulse frequency is much higher.

In stepping-up and rectifying a high-frequency voltage, problems are encountered, in particular, in connection with the parasitic capacitance of the secondary high-voltage winding and the capacitance of the rectifying diodes. It is important to keep said parasitic capacitances as low as possible. The coupling factor between the secondary and primary side of the transformer is also of importance. This factor should be as high as possible to keep the stray self-inductance of the transformer low. This latter is achieved by not manufacturing the primary winding from wire, but by constructing it with copper foil over the full width of the coil body and laying the secondary windings therearound.

The parasitic capacitance of the secondary winding of the transformer can be kept low by using a fractional rectifying principle. Figure 12 shows diagrammatically the manner in which said rectifying principle can be implemented. The transformer TR is provided with a ferrite core 20 onto which the primary winding 21 is fitted. The resonant current $I_{LC}$ flows through said primary winding 21 and across said primary winding there is the voltage Vp already mentioned above.

The secondary winding of the transformer TR is divided into a number of subwindings. In the example illustrated in Figure 6, six of such subwindings are present. The number needed in practice will, of course, depend on the desired transformer ratio. The subwindings are indicated in Figure 12 by the reference numerals 22 and 27 inclusive. Each of said subwindings is composed of a single-layer winding which is always wound in the same direction. This direction is in the usual way indicated in Figure 12 by a dot, and to be specific, at the right-hand side of the subwinding concerned. The ends of the various subwindings are connected to each other via rectifying diodes, and to the specific in a manner such that the start of a subwinding is in each case connected to the end of the adjacent windings via diodes which are mutually in the forward direction. The right-hand end of the subwinding 23 is connected to the left-hand end of the subwinding 22 via the diode 28 and is connected to the left-hand end of the subwinding 24 via the diode 29. The left-hand end of the subwinding 23 is connected to the right-hand end of the subwinding 22 via the diode 30 and is connected to the right-hand end of the subwinding 24 via the diode 31. In a similar manner, the diodes 32 to 37 inclusive are used to connect the other subwindings to each other in the same manner. Furthermore, two further diodes 38 and 39 are also present at the top of the resulting configuration, while the diodes 40 and 41 are fitted at the bottom, and to be specific, in a manner such that the diodes 40, 37, 34, 33, 31, 30 and 39 form a continuous diode chain, whereas the diodes 41, 36, 35, 32, 29, 28 and 38 form another continuous chain. The ends of the two chains are connected to each other and are connected to the output capacitor Co.

In a test model, use is made of a transformer having six windings which each generate 667 V, resulting in a total output voltage Vo across the output capacitor Co of 6 x 667 V = 4,000 v. the output capacitor Co has a capacitance of 40 μF and it was possible to charge it in 0.5 seconds with the aid of the converter according to the invention. The mean charging current was 320 mA and the amount of energy in the fully charged capacitor was 640 Ws.

As a result of using the fractional rectifying principle described, it is not necessary to use any special high-voltage diodes since only a part of the total high voltage to be built up is developped across each diode. Since the voltage across the nonconducting diodes may increase to double the value, depending on the diodes available, it may be advisable in practice to use eventually two diodes in series for each diode illustrated in Figure 6. In the test circuit, it was possible to make use of cheap and fast 1,000 V diodes with a very low capacitance and a very short reverse recovery time.

Finally it is remarked that, although thyristors are used in the illustrated embodiments, also other current switching semiconductors can be used as transistors.

## Claims

1. Energy converter comprising:
- two input terminals destined to become connected to a DC input energy source,
- a serial circuit of two current switching semiconductors such as thyristors connected between said two input terminals, each of said two thyristors having a diode connected antiparallel across the respective thyristor,
- a resonance circuit comprising at least one capacitive and at least one inductive element, as well as the primary winding of a transformer, said resonance circuit being connected to the junction between said two thyristors,
- a rectifying circuit connected between the secondary winding of said transformer and two output terminals,
- a current sensor for detecting the current through the resonance circuit,
- a pulse generator circuit for receiving a signal from said current sensor and delivering in response thereto trigger pulses to the gates of said two thyristors, such that in a cyclic succession a first thyristor is fired resulting in a resonant current through the resonance circuit, said current running through the first fired thyristor during a first time period and running after polarization inversion of said current through the diode, connected anitparallel to said first thyristor, during a second time period, whereafter the second thyristor is fired resulting into a resonant current through the resonance circuit, said current running through the second fired thyristor during a third time period and running after polarization inversion of said current through the diode, connected antiparallel to said second thyristor, during a fourth time period, characterized in that
- each of said first, second, third and fourth time periods covers a half sinusoidal wave period of the resonant current,
- both the sum of the first and second periods and the sum of the third and fourth periods are shorter than the time period between two succeeding trigger pulses,
- the resonance circuit is dimensioned such that the maximum amount of energy will be delivered at the output terminals as the time period between two succeeding trigger pulses reaches its minimum.

2. Energy converter according to claim 1, characterized in that the resonance circuit comprises one capacitive element and two inductive elements connected such that the two inductive elements are in serial configuration with the already mentioned thyristors connected between the two input terminals, whereas the capacitive element in a serial configuration with the primary transformer winding is connected on the one hand to junction between both inductive elements and on the other hand to the already mentioned junction between both thyristors.

3. Energy converter according to claim 1, characterized in that the resonance circuit comprises two capacitive elements and two inductive elements connected such that the two inductive elements are in a serial configuration with the already mentioned thyristors connected between the two input terminals, the two capacitive elements are in a serial configureation connected between the two input terminals, whereas the primary transformer winding is connected on the one hand to the junction between inductive elements and on the other hand to the junction between both capacitive elements.

4. Energy converter according to any of the preceding claims, characterized in that the pulse generator circuit is embodied such that the minimum time between two succeeding trigger pulses is slightly larger than twice the gate turn off time of the used thyristors.

5. Energy converter according to claims 4 or 5, characterized in that the pulse generator circuit is embodied such that the minimum time between two succeeding trigger pulses is equal to or slightly larger than the sum of twice the gate turn off time of the used thyristors and once the reverse recovery time of the used diodes, connected across said thyristors.

6. Energy converter according to any of the preceding claims, characterized in that the component values of the inductive and capacitive elements of the resonance circuit are selected such that the resonant frequency corresponds to the selected minimum time between two succeeding trigger pulses.

7. Energy converter according to claim 2, characterized in that a snubber circuit consisting of a serial combination of a capacitor and a diode, as well as a resistor parallel to said diode, is connected parallel to each thyristor.

8. Energy converter according to claim 7, characterized in that the capacitance value of the capacitor in each snubber circuit is selected such that resonance frequency, determined by the capacitor and by the inductive elements of the abovementioned resonance circuit have a predetermined value such that the maximum di/dt and dv/dt gradients acorss the semiconductor components in the converter are within the allowable range for said components.

# Fig-1

# Fig-3

## Fig - 2a

$V_{LC}$   $\frac{1}{2}V_i$

$t0$    $t1$   $t2$     $t3$     $t$

$-\frac{1}{2}V_i$

## Fig - 2b

$I_{LC}$   $\frac{\frac{1}{2}V_i}{\sqrt{\frac{L_r}{C_r}}}$

$t$

$p$   $q$   $r$   $s$

## Fig - 2c

$V_C$   $V_i$

$t$

$-V_i$

Fig-4a

Fig-4b

Fig-4c

# Fig-5a

# Fig-5b

Fig-6a

Fig-6b

Fig-7a

Fig-7b

fig-8

OUTPUT CURRENT I OUT

$t$  $u$  $T_R$

$tq$

$\pi$  $2\pi$  $3\pi$  $4\pi$  $5\pi$  $6\pi$  $7\pi$  $8\pi$

INDENTED MODE  →  TRIGGER MODE  $\phi$

fig-9

$I_{LC}$

$t_1$  $t_2$  $t_3$

$t$

$I_{t1}$

$t$  $u$  $v$

# fig - 10

# fig-11a

$I_{LC}$

t

t          u          v

# fig-11b

$V_{Th}$

WITHOUT SNUBBER

t

# fig-11c

$V_{Th}$

WITH SNUBBER

t

# fig-12

# Fig-13

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | WO-A-8 103 400 (SCHWARZ) <br> * Page 4, line 7 - page 12, line 15 * <br> --- | 1-6 | H 02 M 7/523 |
| A | US-A-3 953 779 (SCHWARZ) <br> --- | | |
| A | EP-A-0 071 284 (HOLLANDSE SIGNAALAPPARATEN BV) <br> --- | | |
| A | EP-A-0 141 985 (K.K. TOSHIBA) <br> --- | | |
| A | US-A-3 634 800 (FISHER) <br> ----- | | |

TECHNICAL FIELDS SEARCHED (Int. Cl.4)

H 02 M 7/00

The present search report has been drawn up for all claims

| Place of search | Date of completion of the search | Examiner |
|---|---|---|
| THE HAGUE | 06-10-1988 | BERTIN M.H.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)